# EUROPEAN PATENT APPLICATION

(11) **EP 3 069 983 A1**
(43) Date of publication of application: **21.09.2016**
(21) Application number: 15382133.5
(22) Date of filing: 20.03.2015
(51) Int. Cl.: B62M 6/90, B62J 9/00

(54) **BATTERY ASSEMBLY FOR AN ELECTRIC BICYCLE**

(71) Applicant: BHBIKES EUROPE, S.L., 01015 Vitoria-Gasteiz (Alava) (ES)
(72) Inventor: Beistegui, José, Luis, 01015 VITORIA-GASTEIZ (ÁLAVA) (ES)
(74) Representative: Carpintero Lopez, Francisco

(57) **Abstract**

The present invention relates to a battery assembly for an electric bicycle which is an effective, comfortable and compact solution for safely fixing and transporting the battery, preventing any possibility of the battery falling, being stolen or damaged, the battery assembly (1) comprising: a battery (10) having a guide rail (11) and first electrical connection means (12); and a fixing device (20) in turn comprising an elongated body (21) which can be inserted in the guide rail (11) of the battery (10), second electrical connection means (22) located on the lower face of the elongated body (21) for contact thereof with the first connection means (12), and an anchoring element (23) located at the proximal end of the elongated body (21) for coupling thereof to the seat tube (T) of the bicycle. Preferably, the elongated body (21) additionally comprises a locking mechanism (30) for fixing between battery (10) and elongated body (21).

## Description

### Object of the Invention

The present invention belongs to the transport sector, more specifically to cycles, particularly battery-powered electric bicycles.

The object of the present invention is a battery assembly for electric bicycles which is an effective, comfortable and compact solution for safely fixing and transporting the battery, preventing any possibility of the battery falling, being stolen or damaged.

### Background of the Invention

Different models of electric bicycles which, driven by an electric motor, allow transforming electrical energy into mechanical energy, thereby moving the bicycle forward, are well known on the market today.

More precisely, the correct name when referring to electric bicycles is "pedal-assist bicycles" in which the electric motor is only put into operation when required by the user, i.e., when the user needs to power the motor to boost pedaling. The electric motor is connected by means of wiring to a battery which is responsible for supplying electrical energy to the motor.

Batteries that are conventionally used have considerable weight and volume such that finding the best location thereof in the bicycle has always been a problem. One of the most widely used solutions is to make use of the rear rack of the bicycle for mounting the battery thereon, as described in patent application WO2015/001110; although this solution is certainly practical, it has the drawback of completely or partially disallowing use of the rack for its intended purpose. Other solutions have led to placing the battery in the down tube of the bicycle, as in the case of DE19640248, which is unsightly because it significantly increases the volume of the frame and the down tube in particular.

The solution described in EP2653371 tries to minimize the impact as regards esthetics and volume represented by mounting the battery on the down tube by means of an ingenious solution in which the external design of the battery casing is adapted according to the design of the down tube itself to partially fit the battery in the down tube, the battery therefore becoming less noticeable to the eye.

Use of lithium ion technology in such batteries has allowed reducing their size, maintaining similar load capacities, therefore allowing placement thereof in previously inconceivable locations of the bicycle itself, such as the seat tube, and do not involve modification of the standard bicycle frame design.

Several drawbacks have thus been detected in relation to fixing, coupling and/or safety of batteries in current electric bicycles (which will be referred to as such hereinafter for the sake of simplicity), among which the following stands out:
- Besides being rather unsightly, current location of batteries can generate continuous vibrations, friction and small impacts with the battery, causing severe battery damage in the long term, with the corresponding loss of performance and autonomy.
- Furthermore, said continuous vibrations and friction mentioned in the preceding point often cause noises that are extremely annoying for users when riding the bicycle.
- "Fanny pack"-type zipper pouches for storing the battery therein are known. This solution is completely insufficient since the battery is not safely fixed, causing the battery to move inside the pouch, thereby also damaging the battery.
- Finally, another type of battery fixing, which is perhaps the most widespread in rental bikes, is known in which the battery is placed vertically in the rear lower part of the seat tube, next to the bottom bracket. This solution is still not completely safe and effective because in addition to involving additional weight of the considerably large battery, its decoupling systems are extremely problematic and tedious, preventing quick release thereof by the user to charge the battery

### Description of the Invention

The present invention solves the aforementioned drawbacks by providing a battery assembly which is an effective, ergonomic and compact solution for safely fixing and transporting the battery, preventing any possibility of the battery falling, being stolen or damaged, in addition to allowing simple and fast coupling and decoupling of the battery by an authorized user, thereby being able to comfortably release same when desired.

The battery assembly of the invention is of the type comprising a battery and a fixing device for fixing the battery for coupling thereof to the bicycle.

More specifically, the battery assembly object of the invention has a battery having a guide rail and first electrical connection means; whereas the fixing device in turn comprises an elongated body which can be inserted in the guide rail of the battery, second electrical connection means located on the lower face of the elongated body for contact thereof with the first electrical connection means, and an anchoring element located at the proximal end of the elongated body for coupling thereof to the seat tube of the bicycle.

Optimal and safe coupling between the battery and fixing device is thereby obtained, forming a compact, ergonomic and lightweight assembly that at no time hinders the user, preventing any possibility of unwanted movements or vibrations.

The elongated body of the fixing device has furthermore been envisaged to be able to comprise a locking mechanism for fixing between battery and said elongated body, thereby assuring secure and safe attachment between the battery and the fixing device in the locking position, preventing the battery from being stolen or wrongfully removed by third parties.

In addition, according to a preferred embodiment the battery additionally comprises a push-button for releasing said battery from the elongated body of the fixing means, as well as a display to allow seeing the state of charge of the battery.

Another object of the invention relates to the electric bicycle comprising a battery assembly as described in the preceding paragraphs.

### Description of the Drawings

To complement the description being made and for the purpose of aiding to better understand the features of the invention according to a preferred practical embodiment thereof, a set of drawings is attached as an integral part of said description in which the following is depicted with an illustrative and non-limiting character:
Figures 1A and 1B show respective views of a bicycle seat to which the battery assembly of the invention has been coupled, only the fixing device, without the battery, being seen in Figure 1B.
Figure 2 shows a perspective view of the two basic elements forming the invention, the guide rail of the battery as well as the elongated body of the fixing device intended for being inserted in said guide rail being clearly seen.
Figure 3 shows a perspective view of the battery assembly in the locking position in which the elongated body is inserted in the guide rail of the battery, the locking mechanism and clamp lock for fixing thereof to the seat tube of the bicycle being seen in this view.
Figure 4 shows a sectioned side view in which the inner components of the locking mechanism and push-button can be seen, the battery assembly being seen in this case in the completely locking position, with the bushing moved and fitted in the recess of the guide rail of the battery.

### Preferred Embodiment of the Invention

A preferred embodiment is described below in reference to the aforementioned drawings, without limiting or reducing the scope of protection of the present invention.

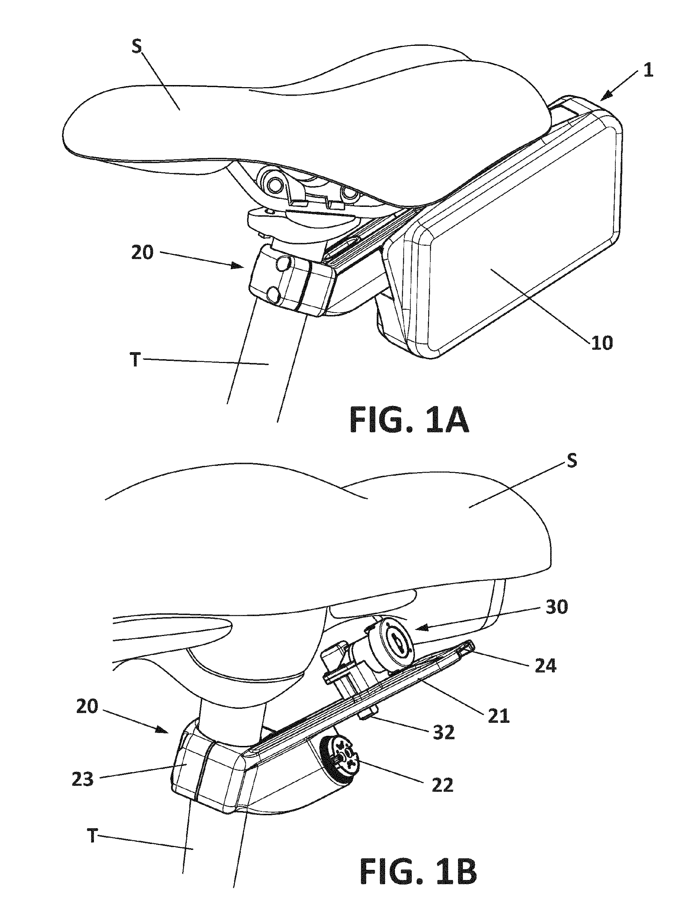

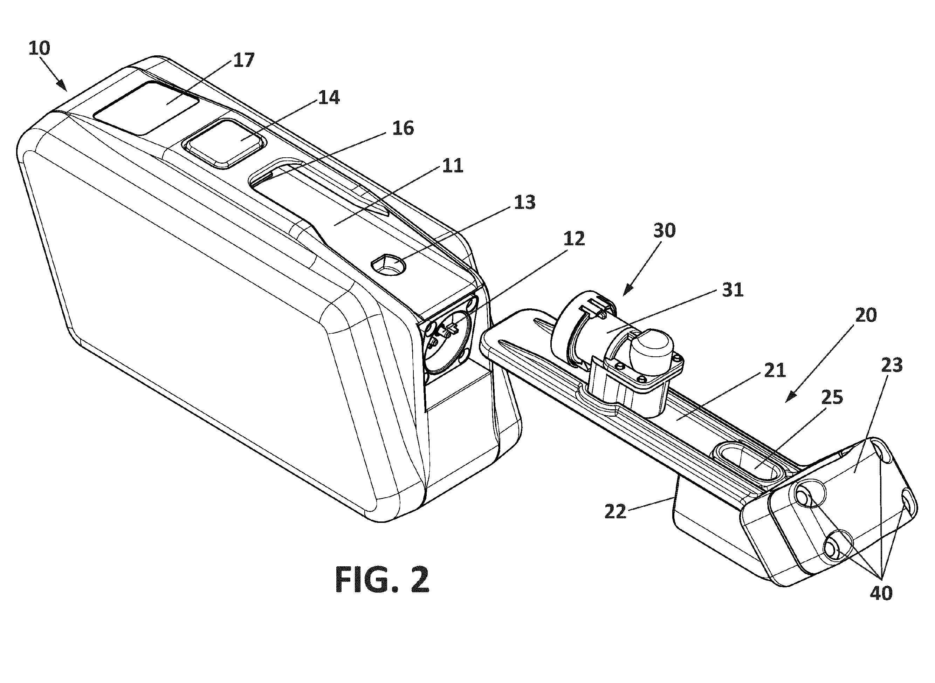

Figure 1A shows the battery assembly (1) of the invention, which comprises:
- a battery (10) which has in the present example a quasi-rectangular shape with blunt and rounded edges, a guide rail (11) and first electrical connection means (12), as shown in Figure 2; and
- a fixing device (20) for fixing thereof to the bicycle and comprising an elongated body (21) which can be inserted in the guide rail (11) of the battery (10), second electrical connection means (22), shown in Figure 1B, located on the lower face of the elongated body (21) for contact thereof with the first connection means (12), and an anchoring element (23) located at the proximal end of the elongated body (21) for coupling thereof to the seat tube (T) of the bicycle, as can be seen in Figures 1A and 1B.

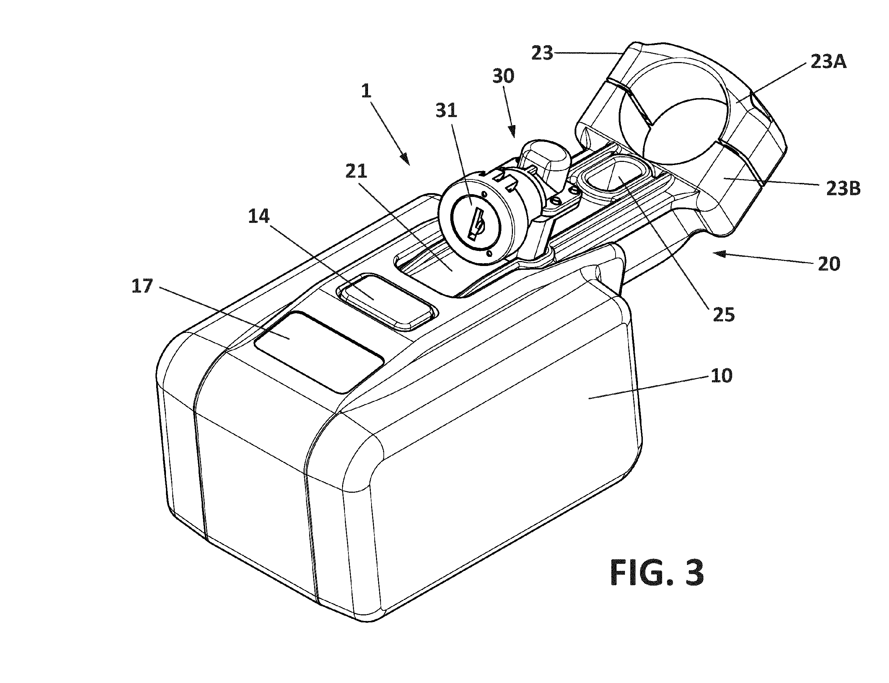

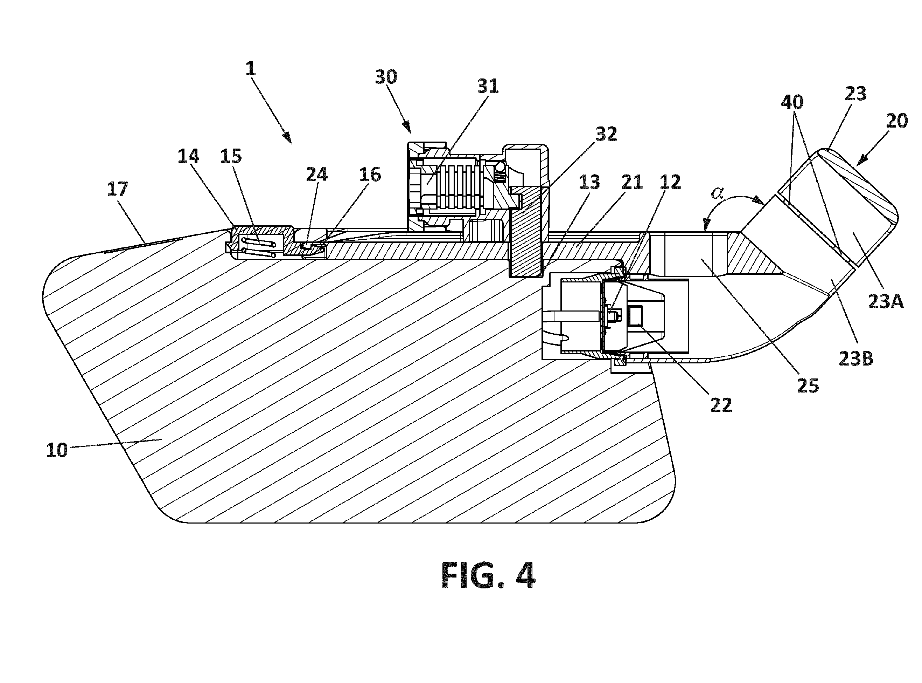

Furthermore, it can be seen in Figures 1B and 3 that the elongated body (21) additionally comprises a locking mechanism (30) for fixing between battery (10) and said elongated body (21), which in the present embodiment is a key lock provided with a cylinder (31) and a bushing (32) movable between a locking position, shown in Figure 4, and a release position, in which the bushing (32) is moved upwardly, allowing extraction of the elongated body (21) of the fixing device (20).

On the other hand, it can be seen in Figures 2 and 4 that the guide rail (11) of the battery (10) also has a recess (13), having a quasi-circular shape in this example, in which the bushing (32) of the locking mechanism (30) can be inserted in the locking position thereof. This will allow locking the battery (10) in a safe closed or fixed position, the battery (10) and the fixing device (20) therefore being securely attached, this being a compact solution without possible vibrations between both elements.

It can be seen in Figures 2, 3 and 4 that the battery (10) further comprises a push-button (14) for releasing said battery (10) from the elongated body (21) of the fixing means (20). Said push-button (14) has at least one spring (15) and a locking tab (16), as seen in Figure 4.

Furthermore, the possibility of the battery (10) being able to incorporate a display (17) for seeing the state of charge of the battery (10) has been contemplated, said display (17) being located at an upper end of the battery (10), as shown in Figure 1A, such that the display (17) is easily accessible and visible from the outside, without having to decouple the battery (10) at any time.

According to the present embodiment, the anchoring element of the fixing device (20) is a clamp lock (23) located at the proximal end of the elongated body (21), as shown in Figures 1B and 3, for optimal coupling to the seat tube (T) of a bicycle. More particularly, said clamp lock (23) is formed by two independent, opposing C-shaped parts (23A, 23B) attached to one another through screwing means (40), as depicted in Figures 2 and 4.

In addition, it has been envisaged that the clamp lock (23) has an angle of inclination (α) with respect to the horizontal plane of the elongated body (21), such that in the final coupling position of the battery assembly (1) in the seat tube (T) of a bicycle, the locking device (20) is located in the area below the seat (S), the battery (10) being partially located in said area below the seat (S), as shown in Figure 1A, thereby providing greater protection and ergonomics to the battery assembly (1), while at the same time being a compact and easy-to-install and -decouple solution, in addition to being lightweight such that it is barely noticeable for the cyclist.

It has also been envisaged that the elongated body (21) has a projection (24) at the distal end thereof, shown in Figures 1B and 4, such that in the position in which the elongated body (21) is completely inserted in the guide rail (11), see Figure 4, the locking tab (16) of the aforementioned push-button (14) acts as a stop element of the projection (24), thereby preventing separation between the elongated body (21) and battery (10), assuring a secure and safe attachment between them at all times.

Finally, it should be pointed out that there is a through groove (25) in the elongated body (21), particularly configured to allow passage of electrical cables, which are not depicted, for suitable connection between the battery (10) and electric motor of the bicycle.

## Claims

1. Battery assembly (1) for an electric bicycle, comprising a battery (10) and a fixing device (20) for fixing the battery (10) for coupling thereof to the bicycle, **characterized in that**:
- the battery (10) has a guide rail (11) and first electrical connection means (12); and
- the fixing device (20) in turn comprises an elongated body (21) which can be inserted in the guide rail (11) of the battery (10), second electrical connection means (22) located on the lower face of the elongated body (21) for contact thereof with the first connection means (12), and an anchoring element (23) located at the proximal end of the elongated body (21) for coupling thereof to the seat tube (T) of the bicycle.

2. Battery assembly (1) according to claim 1, **characterized in that** the elongated body (21) additionally comprises a locking mechanism (30) for fixing between battery (10) and said elongated body (21).

3. Battery assembly (1) according to claim 2, **characterized in that** the locking mechanism (30) is a key lock provided with a cylinder (31) and a bushing (32) movable between a locking position and a release position.

4. Battery assembly (1) according to claim 3, **characterized in that** the guide rail (11) of the battery (10) has a recess (13) in which the bushing (32) of the locking mechanism (30) can be inserted in the locking position thereof.

5. Battery assembly (1) according to claim 1, **characterized in that** the anchoring element is a clamp lock (23) located at the proximal end of the elongated body (21) for coupling thereof to the seat tube (T) of a bicycle.

6. Battery assembly (1) according to claim 5, **characterized in that** the clamp lock (23) is formed by two opposing C-shaped parts (23A, 23B) attached to one another through the screwing means (40).

7. Battery assembly (1) according to any one of claims 5 or 6, **characterized in that** the clamp lock (23) has an angle of inclination (α) with respect to the horizontal plane of the elongated body (21), such that in the final coupling position of the battery assembly (1) in a seat tube (T) of a bicycle, the locking device (20) is located in the area below the seat (S), the battery (10) being partially located in said area below the seat (S).

8. Battery assembly (1) according to any one of the preceding claims, **characterized in that** the battery (10) additionally comprises a push-button (14) for releasing said battery (10) from the elongated body (21) of the fixing means (20).

9. Battery assembly (1) according to claim 8, **characterized in that** the push-button (14) has at least one spring (15) and a locking tab (16).

10. Battery assembly (1) according to claim 9, **characterized in that** the elongated body (21) has a projection (24) at the distal end thereof, such that in the position in which the elongated body (21) is completely inserted in the guide rail (11), the locking tab (16) of the push-button (14) acts as a stop element of the projection (24) to prevent separation between the elongated body (21) and battery (10).

11. Battery assembly (1) according to any one of the preceding claims, **characterized in that** the battery (10) additionally comprises a display (17) for seeing the state of charge of the battery (10).

12. Battery assembly (1) according to any one of the preceding claims, **characterized in that** the elongated body (21) has a through groove (25) to allow passage of electrical cables.

13. Electric bicycle (11) comprising a battery assembly (1) according to any one of claims 1-12.
